# EUROPEAN PATENT APPLICATION

(11) **EP 3 208 684 A1**
(43) Date of publication of application: **23.08.2017**
(21) Application number: 16155796.2
(22) Date of filing: 16.02.2016
(51) Int. Cl.: G06F 1/26, G06F 1/28

(54) **MOBILE DEVICE TESTING APPARATUS AND METHOD**

(71) Applicant: Teleplan Technology B.V., 1118 BG Schiphol (NL)
(72) Inventor: Priidel, Eiko, 11212 Tallinn Harjumaa (EE); Lobjakas, Mällon, 11315 Tallinn Harjumaa (EE)
(74) Representative: Jöstingmeier, Martin

(57) **Abstract**

An apparatus for testing and/or configuring mobile devices via a USB connection enables to test and/or configure the mobile devices in parallel, if the apparatus has a main controller with root USB hub being connected to a downstream USB hub with ports to which the mobile devices may be connected. Preferably the downstream USB hub comprises a USB routing controller being connected by a local bus system to local bus nodes for sensing physical quantities related to the USB ports and/or for signaling a processing state of a mobile device being connected to an associated downstream USB port of said downstream USB hub.

## Description

### Field of the invention

The invention relates to an apparatus for testing and configuring mobile devices wherein said mobile devices are configured for being connected to a computer via a USB connection. The invention further relates to a method for operating the apparatus.

### Description of the related art

The market for used cell phones, tablet computers and other mobile devices is continuously gaining importance. When offering used cell phones to end consumers, the reseller has to ensure that the device works as intended and that any user data of prior users is fully erased and cannot be recovered. Documentation of the data deletion and the tests for ensuring full functionality of the mobile device is crucial to be able to defend liability claims. To this end used cell phones are prepared in complex processes for being sold again. This preparing generally comprises a couple of steps, e.g. battery testing, updating the operating system, deletion of all user data, display testing, testing of the input devices, like e.g. microphone testing, camera testing, keypad testing, touchscreen testing and the like. As well output devices like loudspeakers, ear plugs, screen, etc., and bidirectional devices (WiFi, GSM, Bluetooth, etc.) are to be tested. These steps can be distinguished roughly in software related steps and hardware related steps. Hardware related steps are those that require external measurements of physical quantities like sound, RF-measurements, screen scanning and the like etc. Further, measurements of the mobile devices' responses to physical input like sound, light and pressure as required for microphone testing, camera testing keypad testing and the like are considered as hardware related steps.

For software related steps it is essentially to provide a data connection between the mobile device and a control system. In practice, the data connection is provided by a USB (**U**niversal **S**erial **B**us) connection.

Prior to performing the hardware related tests, the mobile devices have to be prepared for the hardware relates tests, at least by ensuring that the software installed on the mobile device for controlling the hardware, like, e.g. the operating system, is not corrupted. Or in other words, the software controlling the hardware must behave in a defined way to any inputs during the test. To this end, the software is reinstalled. In practice a particular operating system (e.g. the latest stable release) is installed and all third party software is removed. For the software based steps, the mobile device is usually connected with a cable to a computer, thereby enabling direct access to the mobile device. In most cases the first step is battery charging to a predefined level. Next, the mobile device is disconnected from the charger and connected to a computer by a USB connection to execute the software based step. These steps have been completed manually so far. Subsequently, the hardware based steps are executed in an expensive hardware testing environment.

### Summary of the invention

The problem to be solved by the invention is to simplify mobile device testing and configuration as well as enabling a complete documentation of the testing and/or configuration cycle.

Solutions of the problem are described in the independent claims. The dependent claims relate to further improvements of the invention.

The problem is solved by an apparatus for testing and/or configuring cell phones, tablet computers or other mobile devices and by a method that may make use of such apparatus. The apparatus comprises at least one main controller with at least one root-USB hub. The main controller can be e.g. a motherboard of a microcomputer. A motherboard, as well referred to as main board, is usually considered as the main printed circuit board in general purpose microcomputers and carries at least the most relevant circuits, like e.g. at least the CPU, memory (RAM, ROM), etc. In case the main controller is a motherboard, it thus comprises as well a root-USB hub, being controllable by the CPU or more precisely by instructions being executed by the CPU. Further, the apparatus comprises at least one USB-hub device being connected to the root-USB hub. Here, we distinguish between a "USB-hub device" and the "root-USB hub". The term root USB hub could be replaced as well by "host" or "host hub". The USB-hub device is thus a USB hub having one upstream USB port and a number of downstream (DS) USB ports. In practice, the corresponding chips have often 4 downstream ports. The DS USB ports are simply referred to as USB-ports or DS-ports. At least one of the DS ports has an USB connector, e.g. a socket connector enabling to connect a complementary USB connector to the to the respective USB port. Thus, a mobile device can be connected to said at least one USB-port e.g. using a USB-cable or an USB-adapter cable.

As apparent from the above, herein, the term 'port' or 'USB port' refers to a physical interface between the USB-hub device (briefly USB hub) and thus between the apparatus and a mobile device if connected (or another downstream hub as explained in more detail below). The physical USB port can of course be addressed using an I/O port the latter being an address in port address space, i.e. by an indicating a corresponding address in port address space.

The USB-hub device comprises at least one USB routing controller being configured to route data packages received via the US port of the USB hub from the root-USB hub to an addressed device being connectable to DS port of the DS USB hub and as well from a device (if connected to the DS port) to the root-USB hub. Accordingly, the USB routing controller is connected by data lines to the upstream (US) root-USB hub and downstream as well to the DS USB ports by further data lines, thereby enabling a communication between the at least one USB-port for connecting a mobile device with said root-USB hub. A DS port of the USB hub may as well be connected an US port of a downstream USB hub, which in turn provides a number of further DS ports.

The USB routing controller may comprise a local port for connecting a local bus system enabling a communication between (local) components of the DS USB hub by exchanging data words. This local bus system is preferably not a USB system (USB is a typical example for a non-local bus as well referred to as external bus). This local bus system is briefly referred to 'local bus' or 'internal bus' and the corresponding ports are referred to a 'local ports'. The components of the DS USB hub being connected to the local bus are referred to as local nodes, bus nodes, internal nodes or briefly nodes. Preferably, the local bus is a commonly used bus system for communication between chips, like e.g. I²C, SMBus or 1-Wire. For example the USB routing controller may comprise a micro controller with at least one local port, e.g. an I²C port. The term 'local' shall indicate that the local bus is not configured to include bus notes outside the DS USB hub.

Further, the USB-hub device comprises at least one power controller. The power controller is connected to an external power source, i.e. it is connected to a power source by a power connection (e.g. a cable or a printed circuit board track), which preferably bypasses the USB-root hub. Instead of the term 'power connection' one could as well use the term 'power line(s)', but 'power line(s)' has the notion of high voltages and here in practice the voltages provided by the power supply are in the order of a few Volts (typically 5V for USB 1.0 and USB2.0 and up to 20V for other USB standards like e.g. 3.1). The power provided to the DS USB port(s) is provided by said power source and controlled by the power controller. Thus, the power controller is connected to the DS USB port's power terminals or in other words to the power terminals of the DS USB connector and configured to control and/or monitor the voltage between the respective terminals and/or the current passing the power terminals. Only to avoid ambiguities, 'external power source' means that the power is not provided by the USB connection to the root USB hub, but of course the 'external power source' can be (but does not need to be) inside the same housing as e.g. the main controller and/or the DS USB hub(s). Providing the DS USB-port via the power controller and the power connection (bypassing the USB routing controller) with power, enables to charge mobile devices with higher charging currents than specified by the USB standard, e.g. according to the USB 2.0 standard, with is currently the commonly used one, the current is limited to 500mA per port. But the ports of the USB root-hub are as well specified with only 500mA per root port. Thus the DS hub with typical four or more DS ports device cannot provide 500mA per DS port.

The power controller, for example, can be configured to limit or otherwise control the current. For example, the power controller may be connected to an output pin of the USB routing controller. The output pin may simply signal high or low to the power controller, to enable a reduced current limit at startup and to increase the current limit (e.g. to a predetermined value) after the routing controller and an USB device being connected to the DS-port negotiated the available/required current. In other words, the voltage at the output pin of the routing controller may be used as input to the power controller to thereby provide information about the maximum current the power controller may provide to the respective DS USB port, or more precisely to the device(s) attached to said DS USB port. In turn, the power controller may signal a 'fault' or 'non fault' state by providing a high or low signal (i.e. a voltage signal) to an input pin of the USB routing controller. Only to avoid ambiguities, this high / low voltage level communication does not constitute a local bus system, because no data words are transmitted.

In a preferred embodiment, a maximum current *Iₘₐₓ* provided by the power controller is adjustable by the main controller and/or the USB routing controller. For example, the power controller may be connected to the local bus and the main controller and/or the USB routing controller may be configured to address the power controller via said local bus to thereby send a command defining the maximum current *Iₘₐₓ* to the power controller. Summarizing, the main controller is not configured to address the power controller directly, but by instructing the USB routing controller via the USB to send the respective command ('set *Iₘₐₓ to* ...') to the power controller. The main controller may as well instruct the USB routing controller via the USB to send and/o receive other commands(s) via said the local bus to the power controller, as explained below in more detail.

In addition, the power controller is preferably configured to measure the current and/or the voltage provided to the DS USB port, e.g. as function of time *t*, i.e. *I*(*t*), *U*(*t*), respectively. The power controller may as well be configured to determine data based on its measurements, like e.g. the charge Q(*Q*(Δ*t*) = ∫_{Δ}*ₜI*(*t*)*dt*) and/or power *P*(*P*(*t*) = *U*(*t*) · *I*(*t*) (assuming a direct current, as standard for USB) and/or energy *E*(*E*(Δ*t*) = ∫_{Δ}*ₜ P*(*t*)*dt*) provided to a mobile device being connected to the respective USB port at a time t or a time val Δ*t* = *t*₁ - *t*₀, respectively. Data like this is commonly referred to as 'corresponding measurement data'. More precisely it is data being derived by an e.g. functional relationship from the initially measured data. In practice even the current is in most cases not measured directly but derived from a voltage drop across a resistor using Ohm's law, which is the functional relationship. The measured data and/or corresponding measurement data can be provided to the main controller. The mechanism is again essentially the same, the main controller instructs the USB routing controller to send a command to provide the requested data to the power controller via the local bus.

Summarizing, the power controller is preferably connected by said local bus system to the USB routing controller, thereby enabling a local bus based communication between the USB routing controller and the power controller. The main controller is thus enabled to communicate with the power controller by providing instructions to the USB routing controller to communicate via the local bus system with the power controller. For example, the main controller can be configured to access measurement data like the current *I*(*t*) and/or the voltage U(t) provided by the power controller to a DS USB port via the local bus.

Alternatively, the power controller could be connected directly to the main controller by some bus system, but this would require additional data lines between the DS USB hub and the main controller, which in most cases is unacceptable.

The power controller may as well be configured to communicate with a DS USB device (if) connected to the corresponding DS USB-port, e.g. by modulating a signal on the DS power connections of the respective DS port and/or to the DS data lines.

The USB-root hub (as well referred to as root USB hub) may be connected in parallel to the same power supply as the DS USB hub, but the USB-root hub preferably does not power the DS ports of the DS USB hub. The DS ports of the DS USB hub are supplied by the power supply, preferably directly by the bypassing power connections which are provided by the USB connection between the USB root hub and the DS USB hub. This bypassing enables to provide higher currents to the DS UBSP ports, which is essential for charging mobile devices quickly and thus to enable to check the battery status in a reduced amount of time.

As explained above, the power controller is preferably configured for measuring the current (*I*(*t*)) and/or the voltage (U(t)) being provided to the DS USB-port and for providing said measurements and/or corresponding measurement data via the local bus to the USB-hub and the root-USB hub to the main controller.

An essential advantage of the apparatus is that due to the measurement and communication abilities of the DS-USB hub a battery testing step can be performed at the same time software tests or updates of a mobile device being connected to the corresponding USB port are performed via the USB connection. This is a significant improvement, as the (expensive) amount of time in the hardware testing environment for e.g. RF-testing, can be drastically reduced. This parallel execution of battery testing and software based steps is possible, because in most mobile devices battery loading is controlled by separate battery controller operating even if the mobile device is switched off. For example. the apparatus can monitor the power (and/or the current) being provided to the DS USB port via while performing software based steps via the USB connection to the mobile device. Via the USB connection to the mobile device, the main controller can in addition access battery information, like voltage, charging level, temperature and the like. The main controller can thus check, if the (change) in battery voltage as function of time during charging the battery with a well-known current *I*(*t*) is in accepted limits or not. This enables to recognize batteries with low capacity. Briefly, the availability of charging data (like the current *I*(*t*) and data derived from the current) via the local bus and battery data (like battery voltage, battery temperature and the like) via the USB connection to the mobile device enables to determine at least an estimate for the actual capacity of the mobile device's battery.

As indicated above, the method for solving the above outlined problem may be implemented using the above explained device. The method is thus a method for operating an apparatus for testing and/or configuring cell phones, tablet computers or other mobile devices with a USB port via a USB connection between the apparatus and at least one of said mobile devices. The apparatus comprises at least a main controller with a root USB hub, at least one DS USB hub being connected via a USB connection to the root USB hub as set out above. The DS USB hub comprises at least a USB routing controller being connected with the root USB hub via said USB connection. The DS USB hub comprises at least one local bus node for sensing a physical quantity and/or for controlling a signaling means. The node for sensing (sensing node) may e.g. be or comprise an analog to digital converter. More generally one may refer to the sensing node as a(n input) signal processing controller. Input means here an input relating to said physical quantity. The node for controlling a signaling device may as well be referred to as output control circuit. For example, the above explained power controller may be is a local bus node for sensing a physical quantity, e.g. the current *I*(*t*) and/or the voltage U(t) provided to the DS USB port, thus power controller can be considered more generally as an input node (I-node). The power controller can as well comprise (and thus be) an output node (O-node and thus and I/O-node) as well referred to as output control circuit. The output control circuit may be configured to receive commands for changing the maximum current *Iₘₐₓ* and/or to control LEDs or other signaling means by said local bus as explained above. Said local bus node is connected by said local bus system with the USB routing controller. The local bus is preferably different from the USB, as explained above. The method comprises sending at least one command from the main controller to the USB routing controller via the USB connection between the USB root hub and the downstream USB hub. Said command comprises at least one instruction for the USB routing controller to communicate with said at least one local bus node via said local bus system. This enables to access information and/or control signaling devices, actuators (e.g. for mechanically releasing a finished device) and the like which are preferably assigned to a DS USB port of the DS USB hub.

Said communication with said at least one local bus node via said local bus system may e.g. include a request command to a power controller to send measurement data e.g. of the current (*I*(*t*)) and/or voltage (U(t)) provided to a device being connected to a DS USB port (or corresponding measurement data, as explained above) via the local bus to the USB routing controller. In turn the power controller sends the requested measurement data to the USB routing controller via the local bus. The USB routing controller receives and preferably stores the measurement data being sent by the local bus node, namely in this example the power controller. The main controller can access the received measurement data by proving a send instruction to the USB routing controller via the USB connection or by directly accessing its memory. This method enables to efficiently monitor physical quantities like e.g. said current (*I*(*t*)) and/or voltage (*U*(*t*)) provided to a device being connected to a DS USB port or corresponding measurement data, while at the same time exchanging data with the mobile device connected to the corresponding DS USB port via the USB connection.

In addition or alternatively, said communication with said at least one local bus node via said local bus system may e.g. include a control command to a signaling controller to power an output port on or off. For example, the output port may control a release lock for releasing a mobile device from a receptacle for receiving a mobile device and/or locking the mobile device in the receptacle of the apparatus.

In a preferred embodiment said instructions include to send a data frame comprising said command to said local bus node via the local bus system.

In practice, the available USB routing chips can communicate via a local bus (like e.g. I²C, SMBus or 1-Wire) only with a memory. Available USB routing chips are thus configured to communicate via the local bus only with a memory. In other words, the USB routing controller does not understand commands for addressing other nodes than memory nodes. USB routing controllers thus have never been intended to communicate with a sensing node or with a control node (briefly with I/O nodes). Thus, the USB routing controller can only generate data frames according to the memory standard which is not understood by other types of nodes like said sensing and/or signaling node (more generally like said I/O node), like e.g. the above explained power controller. In a preferred embodiment, the main controller instructs the USB routing controller using the memory related commands to generate a frame according to an I/O node's standard to thereby send a command to an I/O node. This sounds complicated but is in fact possible, because memory command frames in general have two request bytes indicating the start and the end address. These can be set arbitrarily and thus the corresponding position in the frame can be set as required by the respective receiving node. The other positions in the frame can be 'filled' in the same way, because after the start and the end address usually a number of bytes is added that shall be written into the memory starting at the starting address. Thus the corresponding frames can be filled almost arbitrarily using memory related commands. The node address (node number) is of course constant within the local bus otherwise frame delivery is unreliable. Thus any relevant field in a command frame can be set ('filled') using memory frame related commands. In turn the addressed i.e. receiving I/O node understand the command as intended.

USB routing chips (i.e. USB routing controllers) are commercially available and referred to as USB hub controllers. Here, we use a slightly different wording, because a full USB hub may consists of more than only the USB hub controller, e.g. said power controller, memory, power supply, etc.. The 'USB routing controller' as understood here is the controller that connects at least the data lines of the US port with the data lines of the DS ports and takes care that packages send from a USB host and thus received via the US port are routed to the addressed USB slave (i.e. to the corresponding DS port) as defined in the corresponding USB standard.

### Description of Drawings

In the following the invention will be described by way of example, without limitation of the general inventive concept, on examples of embodiment with reference to the drawings.
Figure 1 shows an apparatus for testing and configuring mobile devices,
Figure 2 shows a schematic simplified block diagram of the apparatus in Fig. 1
Figure 3 shows an example of a DS USB hub.

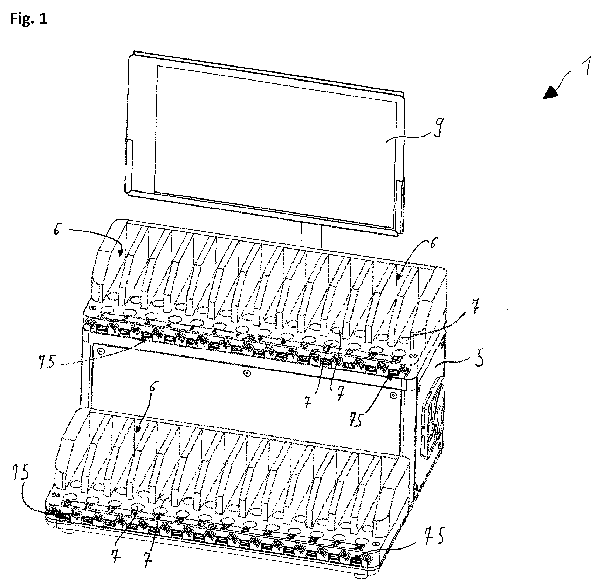

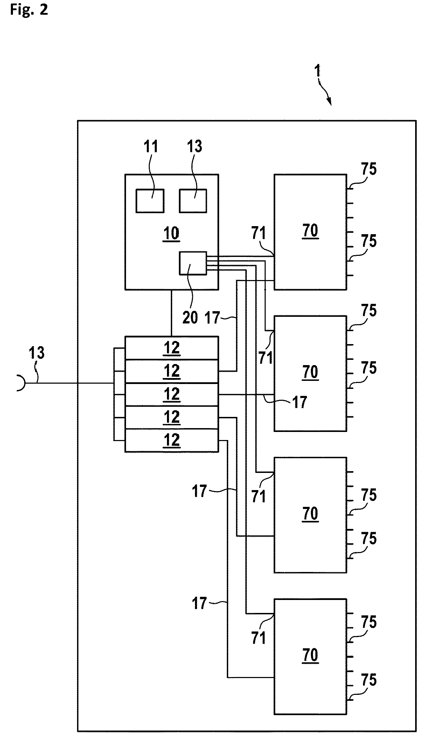

In figure 1 an apparatus 1 for testing and/or configuring mobile devices is shown. The apparatus 1 has a housing 5 for encasing at least one of a main controller 10 with a root USB hub 20, a power supply 12, a network interface, a hard drive, a graphic card and the like (see Fig. 2). The apparatus further comprises a number of receptacles 6, each being configured for receiving for a mobile device e.g. a cell phone, a tablet computer or the like. In the example of Fig. 1, there are 28 receptacles, but the number is not limited to 28. In this example, the receptacles 6 are boxes each with an opening enabling to insert a mobile device.

Each receptacle 6 has a DS USB port 75 associated with the respective receptacle 6. Further, each receptacle 6 may preferably have, at least one LED 7 (or another type of light source) for signaling a status of a mobile device being connected to the DS USB port 75 of the receptacle 6, of the DS USB port 75 and/or of the respective receptacle 6 itself 6. A display 9 is connected to the main controller 10 for displaying e.g. status information about mobile devices being connected to the DS USB ports 75.

Fig. 2 shows a simplified schematic block diagram of the apparatus' 1 electronics. Standard devices like e.g. the display, a graphic card, a network adapter etc. have been omitted for simplicity but can of course be present if required. The apparatus has a main controller 10. The main controller can be e.g. a standard computer's motherboard with a CPU 11, memory 13 or any other component as required (e.g. graphic adapter, network adapter, etc.). In any case, the main controller comprises a root USB hub (20). In this example, the root USB hub 20 has four root ports 25. The number 'four' is of course only an example, i.e. the main controller 10 may comprise any number of root ports 25. At least one of these root USB ports 25 is connected to a DS USB hub device 70. In the example embodiment there are four DS USB hub devices 70 each being connected to the main controller via a USB connection 29, again, the number is only an example, i.e. the apparatus 1 comprises at least one DS USB hub 70 being connected to a root USB port 25 of the main controller 10 by a USB connection 71. The USB connection can be according to any USB standard (e.g. 1.0, 2.0, 3.0, 3.1,...).

The apparatus 1 further comprises at least one power supply 12. The power supply 12 may be connected like usual to a power source, in general the public power grid, as indicated by 13. Here, a number of power supplies 12 are depicted, one for the main controller 10, and one four each of the DS USB hubs 70. But again the number is only an example, e.g. alternatively a single power supply 12 could be sufficient. This is a question of dimensioning the power supply or supplies, respectively. The power connection from the power supplies 12 to the DS USB hubs are referred to as bypassing lines 17, because they bypass the root USB hub 20.This bypassing is optional but preferred.

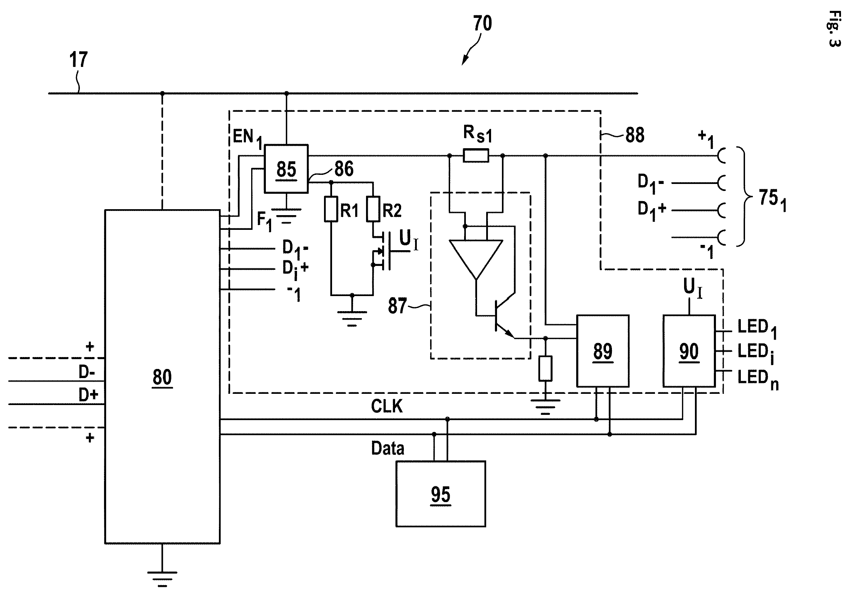

Fig. 3 shows a detail of the DS USB hub 70. The DS USB Hub 70 is connected to the power supply 12 by the bypass line 17. The DS USB Hub has at least one USB routing controller 80. This USB routing controller 80 is connected by a USB connection which is symbolized by the common USB 2.0 lines (+, D-, D+,-) to a root port of the root USB hub 20. Of course other USB standards (e.g. 3.0, 3.1,...) can be used as well, in this case the USB lines have to be adapted accordingly. The routing controller 80 may be supplied with power by the root hub and/or by the bypass line 17. This is indicated by dashing the corresponding connections.

The USB routing controller 80 is connected to two or more, e.g. 7 DS USB ports 75. For ease of visualization only a single port 75₁ is depicted, but other ports can be connected in the same way. The data lines D+₁ and D-₁ are simply connected to the corresponding socket terminals D+₁ and D-₁.

The USB-routing controller 80 is connected to a power controller 88 with a current limiting circuit 85. This current limiting circuit connects the bypass line 17 with the power terminal +₁ of the DS USB port 75₁ and controls the current provided to the DS USB port 75₁. In general, the current is simply limited to a (pre)selected value. The (pre)selected value may be controlled by the USB routing controller 80. This controlling is usually realized by providing a high or low signal to a control pin of the current limiting circuit 85. The high signal may signal 'enable maximum allowable current *Iₘₐₓ'* the low signal may signal 'enable reduced current' or even power off (= no current). The USB routing controller normally negotiates the current with a USB-device being connected to port 75₁ as defined in the USB standard and provides the corresponding input as simple voltage via a control line EN₁ to the current limiting circuit 85. In turn, the current limiting circuit 85 may provide a status to the USB routing controller by a second control line F₁. For example, drawing the voltage at the line F₁ down may signal 'overcurrent' and/or 'temperature out of spec' or the like. In the example, the current limiting circuit is configured to enable the main controller 10 to adjust the maximum allowable current *Iₘₐₓ.* The current limiting circuit 85 determines the effective resistance at a pin 86 to ground potential and sets the maximum possible current *Iₘₐₓ* as a function of the resistance. The resistance can be adjusted by changing a gate voltage U_{I}. The gate voltage U_{I} is provided by an output control circuit 90 which is connected via the local bus (as symbolized lines data and CLK) to the USB routing controller 80. The main controller 10 may thus send instructions to the USB routing controller 80 to send a command to the output control circuit 90 to set the voltage U_{I} to a level being defined by the main controller 10. The main controller can thus set the gate voltage U_{I} and in turn the maximum allowable current *Iₘₐₓ*. In an alternative embodiment the current limiting circuit 85 could be configured to set the maximum allowable current *Iₘₐₓ* in response to a voltage signal being provided by the output control circuit 90.

The current *I*(*t*) being provided by the current limiting circuit 85(i.e. drawn by a device connected to USB port 75₁) is measured, for example using shunt Rₛ₁. The voltage drop over the shunt Rₛ₁ may be detected and amplified using amplifier circuit 87 (indicated by a dashed box 87). The voltage provided by the amplifier circuit 87 is provided to an input circuit 89. The input circuit 89 comprises an analog to digital (AD) converter digitizing the analog input voltage. The digitized signal is forwarded using the local bus (symbolized by two lines 'Data' and 'CLK') to the routing controller 80. The AD converter 89 may as well convert other voltages and forward the corresponding digitized signal to the USB routing controller 80. Only as example, the AD converter is provided with the voltage *U*(*t*) provided to the DS USB port 75₁. Thus, the USB routing controller 80 can receive the information about the voltage *U(t)* provided by the USB port 75₁ via the local data bus (CLK, Data). The AD converter 89 is thus an example for the above explained sensing node and can be referred to as a signal processing controller.

The output control circuit 90 being connected to the local bus enables to control signaling devices, e.g. at least one LED 7 or any other signaling means, symbolized by LED₁,...,LEDᵢ,...,LEDₙ (1 ≤ *i* ≤ *n,* 1 ≤ *n*).

Other bus nodes 95 may be connected as well to the local data bus, e.g. a preferably non-volatile memory 95.

For simplicity, the DS USB hub 70 was explained only with respect to a single DS USB port 75₁, but of course the DS USB hub 70 may have more than a single DS USB port 75. In the example of Fig. 2, each DS USB hub 70 has 7 ports 75.

### List of reference numerals

- 1: apparatus for testing and configuring mobile devices
- 5: housing
- 6: receptacle
- 7: LED or other type of light source
- 10: main controller
- 12: power supply
- 13: connection to power grid
- 16: main controller power connection
- 17: bypass lines
- 14: memory
- 20: root USB hub
- 29: USB connection
- 70: DS USB hub
- 71: UP USB port / US port
- 75: DS USB port / DS port
- 80: USB routing controller
- 85: current limiting circuit
- 86: pin of current limiting circuit
- 87: amplifier circuit
- 88: power controller
- 89: input circuit / sensing circuit
- 90: output control circuit

## Claims

1. An apparatus (1) for testing and/or configuring cell phones, tablet computers or other mobile devices, comprising at least:
- at least one main controller (10) with at least one root-USB hub (20),
- at least one downstream USB-hub (70) device comprising at least:
∘ at least one downstream USB-port (75) with a USB-connector for connecting a mobile device,
∘ at least one USB routing controller (80) being connected by data lines (D+, D-) to the root-USB hub and to the at least one USB port (75), thereby enabling a communication via the at least one downstream USB-port (75) for connecting a mobile device,
- at least one power controller (88) being
∘ connected to a power supply (12) by a power connection (17) bypassing the root-USB hub (20),
∘ being connected to at least one power terminals (+₁) of the USB-port (75) and
∘ being configured to provide power received via the bypassing power connection (17) to the at least one power terminal (+₁) and to control the voltage U(t) and/or current *I*(*t*) being provided to the said power terminals,
**characterized in that**
the USB routing controller (80) is connected by a local bus (CLK, Data) with
the at least one power controller (88), thereby enabling a communication via said local bus (CLK, Data) between the main controller (10) and the at least one power controller (88) via the root USB (20) hub and the USB routing controller (80).

2. The apparatus of claim 1, **characterized in that**
the power controller (88) is configured for measuring the current I(t) and/or voltage (*U*(*t*) being provided to the downstream USB-port (75) and for providing said current I(t) and/or voltage (*U*(*t*) and/or corresponding measurement data via the downstream USB-hub (70) and the root-USB hub (20) to the main controller (10).

3. The apparatus of claim 1 or 2, **characterized in that**
the power controller (88) further comprises an output circuit (90) being configured to receive at least one command via the local bus (CLK, Data) and to power at least one signaling device (LEDᵢ) on or/off as instructed by
said at least one command.

4. The apparatus of one of claims 1 to 3
**characterized in that**
the power controller (88) has at least one input pin being connected with a power controller control pin of the routing controller (80), wherein the routing controller (80) provides a control voltage to the power controller (88) and **in that** the power controller (88) limits the maximum provided current to the USB port (75) in response to said control voltage to a first higher or a second lower current.

5. The apparatus of one of claims 1 to 5
**characterized in that**
the main controller (10) is configured to instruct the USB routing controller (80) via the USB connection between the root USB hub (20) and the downstream USB hub 70 to provide a command to the power controller (88) via the local bus (Data, CLK).

6. The apparatus of one of the claims 1 to 5
**characterized in that**
the USB routing controller (80) is configured to receive instructions via the USB for reading and/or writing data from a memory, or to a memory, respectively, via the local bus by memory instructions.

7. The apparatus of claim 6
**characterized in that**
the main controller (10) is configured to instruct the USB routing controller (80) to generate a frame using the instruction for reading and/or writing data from a memory, which frame has an address field filled with an addresses of the power controller (88), and **in that** the power controller (88) interprets this frame different than a memory for which the USB routing controller is configured to communicate with.

8. A method for operating an apparatus (1) for testing and/or configuring cell phones, tablet computers or other mobile devices with a USB port via a USB connection between the apparatus (1) and at least one of said mobile devices, wherein the apparatus (1) comprises at least a main controller (10) with a root USB hub (20), at least one downstream USB hub (70) being connected via a USB connection to the root USB hub (20) and wherein the downstream USB hub (70) comprises a USB routing controller (80) being connected upstream with the root USB hub (20) via said USB connection and with at least one bus node (89, 90) for receiving input and/or providing an output, said bus node being connected by a local bus system with the USB routing controller (80), the method comprising at least:
Sending at least one instruction by the main controller (10) to the USB routing controller (80) via the USB connection between the USB root hub (20) and the downstream USB hub (70), said command comprising at least one instruction to communicate with said at least one bus node (89, 90) via said local bus system.

9. The method of claim 8,
**characterized in that**
the method comprises acquiring measurement data by measuring a current *I*(*t*) and/or a voltage U(t) provided by a power controller (88) of the downstream USB hub (70) to a downstream USB port (75) of the downstream USB hub (70) as a function of time t and to provide the measurement data and/or a function of the measurement data to a signal processing controller (89), wherein said signal processing controller is connected to the local bus system (CLK, Data).

10. The method of claim 9, **characterized in that**
said at least one instruction comprises at least a command to send a data frame to said signal processing controller (89) and/or output control circuit (90) via the local bus system (CLK, Data).

11. The method of claim 11,
**characterized in that**
the instructions to send a data frame are instructions to send a data frame according to a first communication protocol for communicating with a memory being connected to the local bus (CLK, Data) and **in that** the signal processing controller (89) and/or the output control circuit (90) interprets the data frame according to a second communication protocol that is different from the first communication protocol.

## Amended claims

### Amended claims in accordance with Rule 137(2) EPC.

1. An apparatus (1) for testing and/or configuring cell phones, tablet computers or other mobile devices, comprising at least:
- at least one main controller (10) with at least one root-USB hub (20),
- at least one downstream USB-hub (70) device comprising at least:
∘ at least one downstream USB-port (75) with a USB-connector for connecting a mobile device,
∘ at least one USB routing controller (80) being connected by data lines (D+, D-) to the root-USB hub and to the at least one downstream USB port (75), thereby enabling a communication via the at least one downstream USB-port (75) for connecting a mobile device,
- at least one power controller (88) being
∘ connected to a power supply (12) by a power connection (17) bypassing the root-USB hub (20),
∘ being connected to at least one power terminals (+₁) of the downstream USB-port (75) and
∘ being configured to provide power received via the bypassing power connection (17) to the at least one power terminal (+₁) and to control the voltage *U*(*t*) and/or current *I*(*t*) being provided to the said power terminals,
**characterized in that**
the USB routing controller (80) is connected by a local bus (CLK, Data) with the at least one power controller (88), thereby enabling a communication via said local bus (CLK, Data) between the main controller (10) and the at least one power controller (88) via the root USB (20) hub and the USB routing controller (80).

2. The apparatus of claim 1, **characterized in that**
the power controller (88) is configured for measuring the current I(t) and/or voltage *U*(*t*) being provided to the downstream USB-port (75) and for providing said measured current I(t) and/or measured voltage (*U*(*t*) and/or corresponding measurement data via the downstream USB-hub (70) and the root-USB hub (20) to the main controller (10).

3. The apparatus of claim 1 or 2, **characterized in that**
the power controller (88) further comprises an output circuit (90) being configured to receive at least one command via the local bus (CLK, Data) and to power at least one signaling device (LEDᵢ) on or/off as instructed by said at least one command.

4. The apparatus of one of claims 1 to 3
**characterized in that**
the power controller (88) has at least one input pin being connected with a power controller control pin of the routing controller (80), wherein the routing controller (80) provides a control voltage to the power controller (88) and **in that** the power controller (88) limits the maximum provided current to the downstream USB port (75) in response to said control voltage to a first higher or a second lower current.

5. The apparatus of one of claims 1 to 4
**characterized in that**
the main controller (10) is configured to instruct the USB routing controller (80) via the USB connection between the root USB hub (20) and the downstream USB hub 70 to provide a command to the power controller (88) via the local bus (Data, CLK).

6. The apparatus of one of the claims 1 to 5
**characterized in that**
the USB routing controller (80) is configured to receive instructions via the USB for reading and/or writing data from a memory, or to a memory, respectively, via the local bus by memory instructions.

7. The apparatus of claim 6
**characterized in that**
the main controller (10) is configured to instruct the USB routing controller (80) to generate a frame using the instruction for reading and/or writing data from a memory, which frame has an address field filled with an addresses of the power controller (88), and **in that** the power controller (88) interprets this frame different than a memory for which the USB routing controller is configured to communicate with.

8. A method for operating an apparatus (1) for testing and/or configuring cell phones, tablet computers or other mobile devices with a USB port via a USB connection between the apparatus (1) and at least one of said mobile devices, wherein the apparatus (1) comprises at least a main controller (10) with a root USB hub (20), at least one downstream USB hub (70) being connected via a USB connection to the root USB hub (20) and wherein the downstream USB hub (70) comprises a USB routing controller (80) being connected upstream with the root USB hub (20) via said USB connection and with at least one bus node (89, 90) for receiving input and/or providing an output, said bus node being connected by a local bus system with the USB routing controller (80), the method comprising at least:
Sending at least one instruction by the main controller (10) to the USB routing controller (80) via the USB connection between the USB root hub (20) and the downstream USB hub (70), said instruction comprising at least one instruction to communicate with said at least one bus node (89, 90) via said local bus system.

9. The method of claim 8,
**characterized in that**
the method comprises acquiring measurement data by measuring a current *I*(*t*) and/or a voltage *U*(*t*) provided by a power controller (88) of the downstream USB hub (70) to a downstream USB port (75) of the downstream USB hub (70) as a function of time t and to provide the measurement data and/or a function of the measurement data to a signal processing controller (89), wherein said signal processing controller is connected to the local bus system (CLK, Data).

10. The method of claim 9, **characterized in that**
said at least one instruction comprises at least a command to send a data frame to said signal processing controller (89) and/or output control circuit (90) via the local bus system (CLK, Data).

11. The method of claim 10,
**characterized in that**
the instructions to send a data frame are instructions to send a data frame according to a first communication protocol for communicating with a memory being connected to the local bus (CLK, Data) and **in that** the signal processing controller (89) and/or the output control circuit (90) interprets the data frame according to a second communication protocol that is different from the first communication protocol.
